# EUROPÄISCHE PATENTANMELDUNG

(11) **EP 2 984 920 A1**
(43) Veröffentlichungstag der Anmeldung: **17.02.2016**
(21) Anmeldenummer: 14002797.0
(22) Anmeldetag: 11.08.2014
(51) Int. Cl.: A01D 45/26

(54) **Vorrichtung zum Ernten von Gemüse und Salaten**

(71) Anmelder: König, Rüdiger, 67125 Dannstadt-Schauernheim (DE)
(72) Erfinder: König, Rüdiger, 67125 Dannstadt-Schauernheim (DE)
(74) Vertreter: Lewandowski, Axel

(57) **Zusammenfassung**

Die Anmeldung betrifft eine "Vorrichtung zum Ernten von Gemüse und Salaten" die es ermöglicht, eine Klinge zum Schneiden von Gemüse und Salatpflanzen möglichst konstant in einem definierten Abstand über dem Boden zu führen, ohne dabei eine spezielle Abstandsregulierung zu verwenden. Diese Aufgabe wird dadurch gelöst, dass die Vorrichtung mit möglichst kurzen Auflagen auf dem Beet geführt wird und die Auflagen möglichst nahe im seitlichen Abstand zu der einzelnen Pflanzenreihe angebracht sind, um eine Anpassung an den Boden zu erreichen und dadurch die Klinge in einem nahezu gleichmäßigen Abstand zum Boden zu führen.

## Beschreibung

Die Erfindung betrifft eine Vorrichtung zum Ernten von Gemüse und Salaten.

Der Anbau von Salat und Gemüse erfolgt auf Feldern üblicherweise in Reihen. Beim Freilandanbau von, zum Beispiel Feldsalat, werden die Pflanzen im Abstand von wenigen Zentimetern gesät. Die Aussaat erfolgt, wie bisher nur bei nachrangigem Anbau in Gewächshäusern, mit so genannten Schwamm- oder Einzelkornsämaschinen oder als Breitsaat. Im Freilandanbau und im Gewächshausanbau werden zudem auch Presstopfballen-Pflanzen gepflanzt.

In der Regel werden Salat und Gemüse von Hand geerntet. Die Ernte ist witterungsabhängig und aufgrund hoher Lohnaufwendungen kostenintensiv.

Eine besondere Erschwernis bei der Ernte liegt darin, dass die Pflanzen in der Regel eine Höhe von wenigen Zentimetern aufweisen. Hinzutritt, dass die Pflanzen in einem nahezu gleichmäßigen Abstand zum Boden abgetrennt werden müssen.

Aus dem Stand der Technik sind vor allem Handerntemaßnahmen mit Messern oder bei Salaten mit abgekröpften Feldsalatmessern sowie mit Sensen, die mit Auffangnetzen ausgestattet sind, bekannt.

Neben dem manuellen Ernteverfahren sind verschiedene Maschinen zum Ernten von Salat bekannt.

Aus dem Patent EP 1 156 713 B1 ist eine Erntemaschine bekannt, die in Reihen gepflanzten Feldsalat mittels gezackter Messer, die in Richtung der Schneide der Messer über die Oberfläche des Feldes geführt werden und die Salatblätter vom Wurzelwerk abtrennen. Die einzelnen Messer werden durch eine elektrische Höhenverstellung dicht über der Oberfläche des Feldes geführt. Das Oberflächenprofil der Pflanzenreihen wird mittels Sensoren erfasst. Die Schneidmesser werden mittels Stellenantrieben in der Höhe, entweder automatisch mittels dem Signal der Sensoren oder durch manueller Eingabe und einer Regelung in der Höhe zum Boden geregelt. Nachteilig bei dieser Erfindung ist, dass eine kostenintensive Kombination von Bauteilen und Geräten eingesetzt werden muss, um den Abstand der Messer zum Boden nahezu gleichmäßig zu halten. Ebenfalls nachteilig ist, dass die zu verwendenden Geräte und Baugruppen stark schmutzbelastet sind und deshalb ein erheblicher Aufwand betrieben werden muss, um diese zu schützen.

Eine ähnliche Maschine zum Ernten von Feldsalat ist aus der Erfindung EP 0 613 616 B1 bekannt.

Weitere Vorrichtungen zum Abschneiden von niedrig wachsenden, insbesondere mit ihren unteren Blättern einen Untergrund berührenden Kulturpflanzen sind aus DE 20 2004 017 498 U1, DE 10 2007 052 272 A1 und US 6,622,467 B1 bekannt. In diese Schriften wird auch jeweils ein fester Anschlag definiert, der den Abstand zum Boden regelt. Es werden jedoch jeweils die Messer oder Schneideinrichtungen mehrere Erntereihen eingestellt. Speziell im Freilandanbau, wenn die Beete der Witterung ausgesetzt sind und deshalb, nicht wie im Gewächshaus, uneben sein können, kann dadurch eine der Schneideinheiten oder eines der Messer in den Boden eintauchen oder das Erntegut oberhalb der definierten Schnitthöhe abscneiden.

Eine weitere Erntemaschine für das Ernten von eng am Boden liegenden Pflanzen ist aus der Erfindung DE 19 2010 006 506 A1 bekannt. Der Ernteprozess besteht in dem Bereitstellen einer Schneidvorrichtung, dem Führen des Schneidmessers auf einem im Wesentlichen konstanten Niveau relativ zur Oberfläche des Feldes, dem Rotieren des Schneidemessers mittels eines Rotationsmittels um eine Rotationsachse und dem Abtrennen eines Teils der Pflanze vom Wurzelwerk. Nachteilig bei dieser Erfindung ist, dass die Schneidmesser ebenfalls einzeln in der Höhe geregelt werden müssen und hierfür ein erheblicher Aufwand betrieben werden muss.

Ausgehend von diesem Stand der Technik liegt der Erfindung insoweit die Aufgabe zugrunde, eine Vorrichtung anzugeben die es ermöglicht, eine Klinge zum Schneiden von Gemüse und Salatpflanzen möglichst konstant in einem definierten Abstand über dem Boden zu führen ohne dabei eine spezielle Abstandsregulierung zu verwenden und dabei die Qualität der Ernte zu verbessern, Kosten einzusparen und die Arbeitssicherheit zu erhöhen.

Diese Aufgabe wird dadurch gelöst, dass die Vorrichtung mit möglichst kurzen Auflagen auf dem Beet geführt wird und die Auflagen möglichst nahe im seitlichen Abstand zu der einzelnen Pflanzenreihe angebracht sind, um eine Anpassung an den Boden zu erreichen und dadurch die Klinge in einem nahezu gleichmäßigen Abstand zum Boden zu führen.

Weitere vorteilhafte Ausführungsformen sind in den Unteransprüchen gekennzeichnet.

Die erfindungsgemäße "Vorrichtung zum Ernten von Gemüse und Salaten" wird nun anhand von bevorzugten Ausführungsbeispielen mit Hilfe der beigefügten Zeichnungen näher erläutert.

Es zeigt:
- Fig. 1: Eine perspektivische Ansicht der "Vorrichtung zum Ernten von Gemüse und Salaten".
- Fig. 2: Eine perspektivische Ansicht der "Vorrichtung zum Ernten von Gemüse und Salaten.
- Fig.3: Eine perspektivische Ansicht der "Vorrichtung zum Ernten von Gemüse und Salaten".
- Fig.4: Eine perspektivische Ansicht der "Vorrichtung zum Ernten von Gemüse und Salaten".
- Fig.5: Eine perspektivische Ansicht der "Vorrichtung zum Ernten von Gemüse und Salaten".

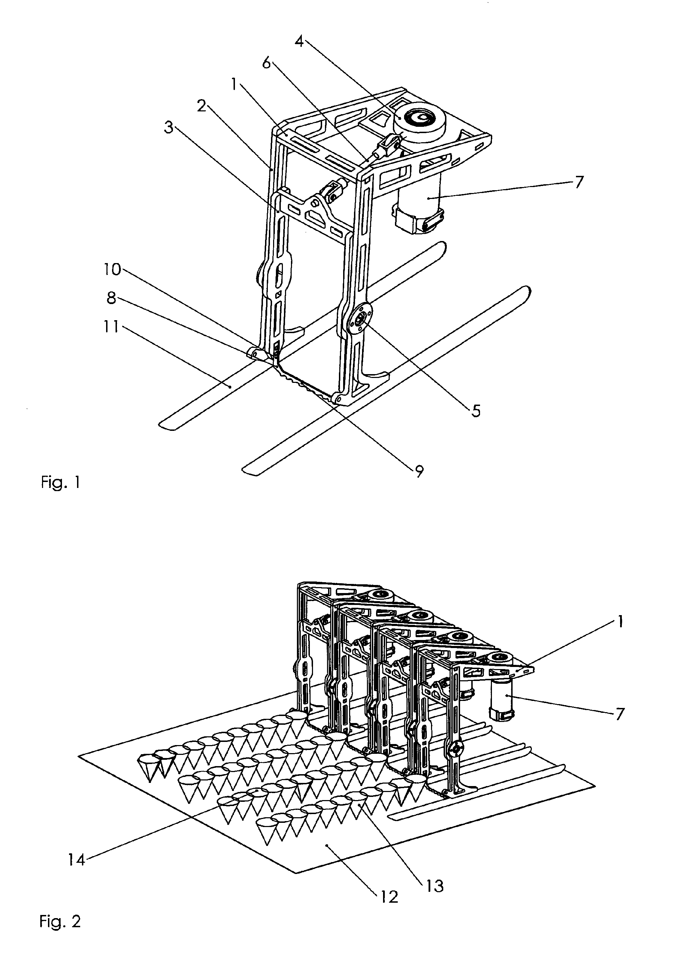

Die Fig. 1 zeigt eine perspektivische Ansicht der "Vorrichtung zum Ernten von Gemüse und Salaten". Die Vorrichtung (1) ist auf einem Grundrahmen (2) aufgebaut. Am Grundrahmen (2) sind die beiden Hauptbestandteile der Vorrichtung Wippe (3) und Exzenterantrieb (4) montiert. Die Wippe ist im Aufnahmepunkt (5) drehbar gelagert. Sie ist in der Grundstellung vertikal ausgerichtet. Am oberen Ende der Wippe (3) ist die Koppelstange (6) drehbar angebracht. Über die Koppelstange (6) ist die Wippe (3) mit dem Exzenterantrieb (4) verbunden. Die Koppelstange (6) ist am Exzenter (4) ebenfalls drehbar gelagert. Der Hub des Exzenters (4) bewirkt somit eine Schwenkbewegung der Wippe (3). In dieser vorteilhaften Ausführung ist der Exzenter mit einem Elektromotor (7) angetrieben. Es sind hier auch andere Antriebe vorstellbar wie zum Beispiel pneumatische- oder hydraulische Antriebe.

Am unteren Ende der Wippe (3) ist eine Klinge (8) befestigt. Die Klinge (8) hat eine Schneidkante (9), die in dieser besonders vorteilhaften Ausführung wellenförmig ist. Es ist aber jede andere beliebige Form, wie zum Beispiel gerade oder sichelförmig vorstellbar. Die Klinge (8) ist U-förmig gebogen. Durch Ändern der Schenkellänge (10) kann der Abstand der Klinge zum Boden eingestellt werden. Dieser Abstand der Klinge zum Boden ist je nach Erntegut unterschiedlich gestaltet. Es ist aber ebenso denkbar, dass die Klinge (8) zum Beispiel über eine Stellschraube in der Höhe justiert werden kann. Da es sich bei der Klinge um ein Verschleißteil handelt und sie deshalb regelmäßig gewechselt werden muss, ist die dargestellte Variante der Höhenanpassung mittels geänderter Schenkellänge (10) die bevorzugte Bauform. Diese Bauform ist zum einen kostengünstiger und zum anderen ist sie weniger anfällig gegen Verschmutzung.

Erfindungsgemäß wird die Vorrichtung (1) mit möglichst kurzen Auflagen (11) auf dem Beet geführt, um eine Anpassung an den Boden zu erreichen und dadurch die Klinge in einem nahezu gleichen Abstand zum Boden zu führen.

Die Fig. 2 zeigt eine perspektivische Ansicht der "Vorrichtung zum Ernten von Gemüse und Salaten". Die Abbildung zeigt eine schematische Darstellung eines Beetes (12) mit Planzen (13). Die Pflanzen (13) sind in Reihen (14) gepflanzt. Durch Witterungseinflüsse kann das Beet (12), anders als in der Darstellung, uneben sein oder sich in Längs- und Querrichtung neigen. Nach dem Stand der Technik sind die Einrichtungen zum Schneiden von zum Beispiel Salat eine durchgehende Klinge oder einzelne Klingen, die auf einem, über das gesamte Beet reichenden, Rahmen befestigt sind. Diese Einrichtungen zum Schneiden von Salat richten sich nach dem geringsten Abstand zwischen Klinge und Boden aus. Durch diese Ausrichtung wird verhindert, dass die Klinge in den Boden schneidet und beschädigt wird. Der erfindungsgemäße Aufbau verwendet für jede Pflanzenreihe eine eigene Schneidvorrichtung (1). Die Vorrichtungen (1) können sich dadurch sowohl in Längsrichtung als auch in der Querrichtung des Beetes einzeln an den Boden anpassen. Es ist hier vorstellbar, die Vorrichtungen (1) an einem Gesamtrahmen zu befestigen, so dass die Position der Vorrichtung in vertikaler Richung aber auch in der Neigung in Längs- und Querrichtung sich dem Boden anpassen kann. Die Aufgabe des Grundrahmens ist in dieser Variante einen gemeinsamen Vorschub in Längsrichtung, zum Beispiel durch eine landwirtshaftliche Zugmaschine zu ermöglichen oder aber auch die Einzelvorrichtung in eine Transportstellung, zum Beispiel für den Straßentransport, zu bringen. Statt der einzelnen elektrischen Antriebe (7) ist es auch denkbar eine gemeinsame Antriebswelle einzusetzen.

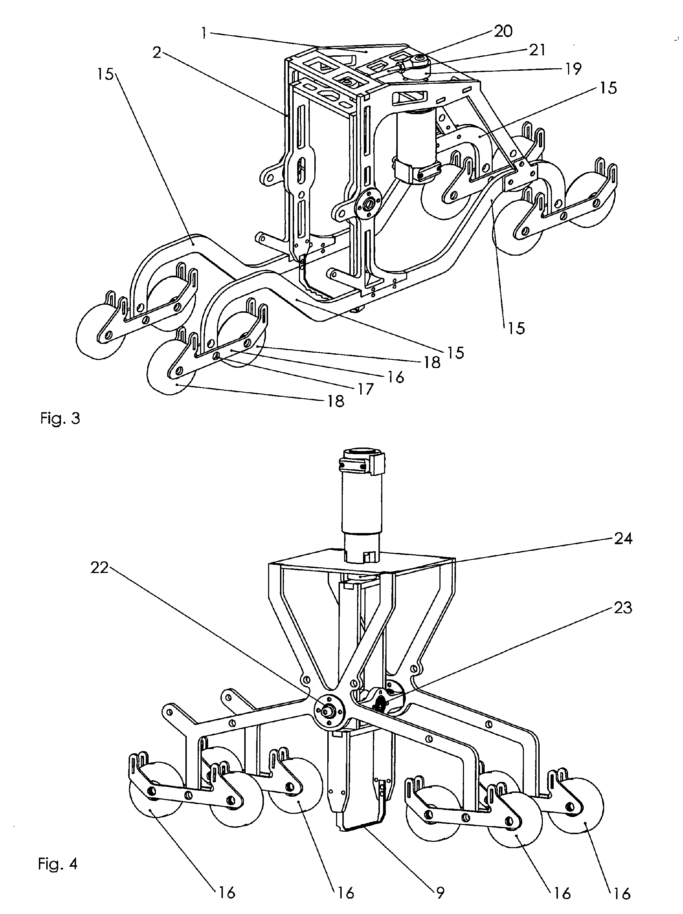

Die Fig. 3 zeigt eine perspektivische Ansicht der "Vorrichtung zum Ernten von Gemüse und Salaten". Die Abbildung zeigt eine weitere vorteilhafte Version der "Vorrichtung zum Ernten von Gemüse und Salaten" (1). Der Grundrahmen (2) ist um die vier Laschen (15) verlängert. An diesen Laschen (15) ist jeweils ein Fahrwerk (16) im Aufhängepunkt (17) schwenkbar gelagert. Das Fahrwerk (16) besteht zusätlich aus zwei Rollen (18). Der Vorteil dieses Aufbaus ist die Reduzierung der Vorschubkraft. Dies ist besonders vorteilhaft bei der gleichzeitigen Bearbeitung einer großen Anzahl von Pflanzenreihen (14). Durch die schwenkbaren Fahrwerke (16) verbessert sich zusätzlich die Anpassung an Bodenunebenheiten.

Ebenso zeigt die Abbildung eine weitere Version des Exzenterantriebs (19). In dieser Version des Antriebs ist nicht die Lagerstelle der Exzenterscheibe zur Mittelachse versetzt, sondern der Befestigungspunkt (20) der Koppelstange (21). Durch diesen Aufbau sind die Bauteile einfacher zu fertigen und dadurch Kosten einzusparen.

Die Fig.4 zeigt eine perspektivische Ansicht der "Vorrichtung zum Ernten von Gemüse und Salaten". Diese Variante der Vorrichtung ist wie die vorherige Version mit vier Fahrwerken (16) ausgestattet. Es wäre aber auch in dieser Variante die Verwendung von Kufen, wie in der Fig. 1 dargestellt, anstatt der Fahrwerke (16) vorstellbar. Zusätzlich zur Drehachse (22), die quer zur Pflanzreihe angeordnet ist und somit den Schnitt in Richtung der Pflanzreihe führt, ist eine zweite Drehachse (23) in Längsrichtung angeordnet. Dadurch ist eine Schneidbewegung quer zur Pflanzreihe möglich. Das Schneidmesser (9) bewegt sich bei diesem Ausführungsbeispiel auf einer Kreisbahn. Da sich das Messer nur geringfügig zur Seite bewegt, und es gleichmäßig um den unteren Totpunkt schwenkt, ergibt sich nur eine geringe Höhenverstellung des Messers (9). Über den Exzenterantrieb (24) läßt sich somit mit nur geringem Aufwand eine überlagerte Schneidbewegung in Quer- und Längsrichtung zur Pflanzreihe realisieren.

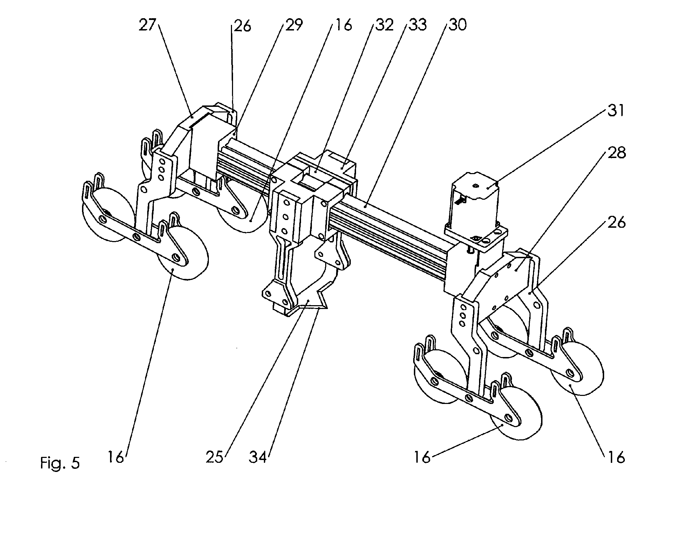

Die Fig.5 zeigt eine perspektivische Ansicht der "Vorrichtung zum Ernten von Gemüse und Salaten". Der Aufbau dieser Variante unterscheidet sich grundsätzlich im Antrieb des Schneidmessers. Die Höhenanpassung des Schneidmessers (25) erfolgt über die vier Laufwerke (16). Die Vorrichtung passt die Schnitthöhe des Messers (25) durch die möglichst nahe an der Pflanzreihe angebrachten Laufwerke (16) und den möglichst kurzen Radstand in Pflanzrichtung, an mögliche Bodenunebenheiten an. Es ist aber auch in diesem Ausführungsbeispiel vorstellbar, die in Fig. 1 beschriebenen Kufen (11) zu verwenden. Die Laufwerke (16) sind in dieser Ausführungsvariante paarweise mit einem Bügel (26) verbunden. Die beiden Radsätze (27) und (28) sind in dieser besonders vorteilhaften Bauform aus Gleichteilen aufgebaut. Verbunden sind die beiden Radsätze (27) und (28) mittels einer Strebe (29). An dieser Strebe (29) wird das Antriebssystem für das Schneidmesser (25) angebracht. Der Antrieb kann wie in einem der vorhergehenden Varianten ein Exzenterantrieb sein. Als Antrieb ist jedoch auch wie hinsichtlich dieser Ausführung beschrieben, eine Linearachse mit beispielsweise einem Spindelantrieb (30) denkbar, die mit einem Elektromotor (31) angetrieben wird. Zur Kraftübertragung ist jedoch ein Zahnriemen oder jede andere Art der Kraftübertragung denkbar. Es ist deshalb auch vorstellbar eine pneumatische Linearachse zu verwenden. Am Schlitten (32) der Linearachse (30) ist eine Messerhalterung (33) befestigt. Die Messerhalterung (33) dient der Übertragung der Linearbewegung auf das Messer (25). Dieses Messer (25) weist in dieser Bauform eine besonders vorteilhafte Geometrie auf. Durch die schräg angeordneten Schneidkanten (34) ergibt sich aus der Linearbewegung in Richtung der Pflanzreihen eine zusätzliche Schnittbewegung in Querrichtung. Durch den langen Verfahrweg der Linearachse (30) wird eine gleichmäßige Schnittbewegung erreicht, die unabhängig von der Fahrgeschwindigkeit ist. Es kann dadurch eine möglichst schnelle Schnittbewegung der tatsächlichen Fahrgeschwindigkeit überlagert werden. Durch eine Messung der Fahrgeschwindigkeit kann mit einer variablen Schnittgeschwindigkeit zusätzlich eine nahezu kontinuierliche und gleichmäßige Schnittgeschwindigkeit erzielt und Schwankungen in der Fahrgeschwindigkeit ausgeglichen werden. Nach dem Erreichen der vorderen Endposition der Messerhalterung (33) auf der Linearachse (30) bewegt sich die Messerhalterung (33) auf der Linerachse (30) rückwärts, in Richtung der hinteren Endlage. Die Rückwärtsbewegung der Messerhalterung (33) findet mit gleicher Geschwindigkeit wie die Fahrgeschwindigkeit der Vorrichtung statt. Dadurch bleibt die Messereinheit (33) in Bezug zum Boden still stehen. Der Vorteil dieses Schneidverfahrens ist die gleichmäßige von der Fahrgeschwindigkeit unabhängige Schnittbewegung. Durch dieses Verfahren lassen sich zudem höhere Schnittgeschwindigkeiten als die Fahrgeschwindigkeit erzielen. Dies bringt besonders beim Anfahren und Anhalten des landwirtschaftlichen Trägerfahrzeugs Vorteile.

## Patentansprüche

1. Eine Vorrichtung zum Ernten von Gemüse und Salaten, bestehend aus einem möglichst kurzen Schneidmesser, um eine Pflanzreihe abernten zu können und seitlichen Auflagen, **dadurch gekennzeichnet, dass** das Schneidmesser zur Fahrbewegung eine zusätzliche Bewegung in Fahrtrichtung und / oder quer zur Fahrtrichtung ausführt und dass die seitlichen Auflagen möglichst kurz sind und in einem möglichst geringen Seitenabstand zur Pflanzreihe angebracht sind, um eine Anpassung der Schnitthöhe des Schneidmessers zum Boden an Bodenunebenheiten anzupassen.

2. Eine Vorrichtung zum Ernten von Gemüse und Salaten, bestehend aus einem möglichst kurzen Schneidmesser, um eine Pflanzreihe abernten zu können und seitlichen Auflagen nach Anspruch 1 **dadurch gekennzeichnet, dass** die Auflagen als Kufen ausgeführt sind.

3. Eine Vorrichtung zum Ernten von Gemüse und Salaten, bestehend aus einem möglichst kurzen Schneidmesser, um eine Pflanzreihe abernten zu können und seitlichen Auflagen nach Anspruch 1 **dadurch gekennzeichnet, dass** die Auflagen mindestens drei Rollen sind, wobei mindestens zwei Auflagerollen auf der einen Seite der Pflanzreihe sind und mindestens eine Rolle auf der gegenüberliegenden Seite der Pflanzreihe ist.

4. Eine Vorrichtung zum Ernten von Gemüse und Salaten, bestehend aus einem möglichst kurzen Schneidmesser, um eine Pflanzreihe abernten zu können und seitlichen Auflagen nach Anspruch 3 **dadurch gekennzeichnet, dass** die Auflagerollen mindestens zu zwei Rollen als Fahrwerk zusammengefasst werden und dieses Fahrwerk schwenkbar am Grundrahmen der Vorrichtung angebracht ist.

5. Eine Vorrichtung zum Ernten von Gemüse und Salaten, bestehend aus einem möglichst kurzen Schneidmesser, um eine Pflanzreihe abernten zu können und seitlichen Auflagen nach einem der vorangegangenen Ansprüche **dadurch gekennzeichnet, dass** das Schneidmesser an einer Schwinge befestigt ist und diese Schwinge durch einen Exzenterantrieb vor und zurück oder nach rechts bzw. links bewegt wird.

6. Eine Vorrichtung zum Ernten von Gemüse und Salaten, bestehend aus einem möglichst kurzen Schneidmesser, um eine Pflanzreihe abernten zu können und seitlichen Auflagen nach einem der Ansprüche 1 bis 4 **dadurch gekennzeichnet, dass** das Schneidmesser an einem Pendel befestigt ist und dass dadurch das Schneidmesser eine überlagerte Längs-und Querbewegung ausführen kann.

7. Eine Vorrichtung zum Ernten von Gemüse und Salaten, bestehend aus einem möglichst kurzen Schneidmesser, um eine Pflanzreihe abernten zu können und seitlichen Auflagen nach einem der Ansprüche 1 bis 4 **dadurch gekennzeichnet, dass** das Schneidmesser an einer Linearachse befestigt ist und die Schnittbewegung durch die Linearachse ausgeführt wird.

8. Eine Vorrichtung zum Ernten von Gemüse und Salaten, bestehend aus einem möglichst kurzen Schneidmesser, um eine Pflanzreihe abernten zu können und seitlichen Auflagen nach Anspruch 7 **dadurch gekennzeichnet, dass** das Schneidmesser eine zusätzliche Querbewegung ausführt.

9. Eine Vorrichtung zum Ernten von Gemüse und Salaten, bestehend aus einem möglichst kurzen Schneidmesser, um eine Pflanzreihe abernten zu können und seitlichen Auflagen nach einem der Ansprüche 7 oder 8 **dadurch gekennzeichnet, dass** das Schneidmesser durch eine Rückwärtsbewegung entgegen der Fahrtrichtung der Linearachse keine relative Bewegung zum Boden ausführt.

10. Eine Vorrichtung zum Ernten von Gemüse und Salaten, bestehend aus einem möglichst kurzen Schneidmesser, um eine Pflanzreihe abernten zu können und seitlichen Auflagen nach einem der Anspruch 1 **dadurch gekennzeichnet, dass** die Schnittbewegung durch einen beliebigen Antrieb ausgeführt wird.

11. Eine Vorrichtung zum Ernten von Gemüse und Salaten, bestehend aus einem möglichst kurzen Schneidmesser, um eine Pflanzreihe abernten zu können und seitlichen Auflagen nach einem der Ansprüche 1 bis 10 **dadurch gekennzeichnet, dass** das Schneidmesser eine zur Bewegungsrichtung des Messers schräge Schneidkante hat, die durch die schräge Anordnung eine zusätzliche Schnittbewegung quer zur Bewegungsrichtung des Schneidmessers erreicht.
